# EUROPEAN PATENT APPLICATION

(11) **EP 3 091 668 A1**
(43) Date of publication of application: **09.11.2016**
(21) Application number: 15166401.8
(22) Date of filing: 05.05.2015
(51) Int. Cl.: H04B 1/28

(54) **RECEIVER ARRANGEMENT FOR USE IN A DIGITAL REPEATER SYSTEM**

(71) Applicant: CommScope Technologies LLC, Hickory, NC 28602 (US)
(72) Inventor: LANGE, Keld, 75443 Ötisheim (DE)
(74) Representative: Maikowski & Ninnemann Patentanwälte Partnerschaft mbB

(57) **Abstract**

A receiver arrangement (20) for use in a digital repeater system (1) comprises an input port (110) for receiving an input RF signal (RF_{IN}), the input RF signal (RF_{IN}) comprising at least one frequency band including a first subband (U1) having a first carrier frequency (f_{L}) and a second subband (U2) having a second carrier frequency (fu) different than the first carrier frequency (f_{L}). A quadrature demodulator (204, 204A, 204B) downconverts, using a local oscillator (312), the input RF signal (RF_{IN}) to an intermediate frequency (f_{IF}) to obtain an intermediate frequency signal having an in-phase component (I) and a quadrature component (Q). An analog-to-digital converter (206_{I}, 206_{Q}) digitizes the in-phase component (I) and the quadrature component (Q). A bandpass filter device (206_{I}, 206_{Q}) filters the in-phase component (I) and the quadrature component (Q). Herein, the local oscillator (312) comprises a programmable oscillator frequency (f_{LO}), wherein the oscillator frequency (f_{LO}) is programmed to lie in between the first carrier frequency (f_{L}) and the second carrier frequency (fu) such that the quadrature demodulator (204) downconverts the first subband (U1) and the second subband (U2) into a common intermediate frequency band (f_{BW}) having a bandwidth around the intermediate frequency (f_{IF}). The bandpass filter device (206_{I}, 206_{Q}) comprises a passband with a programmable bandwidth, wherein the bandwidth of the passband is programmed according to the bandwidth of the intermediate frequency band (f_{BW}).

## Description

The invention relates to a receiver arrangement for use in a digital repeater system according to the preamble of claim 1 and to a method for operating a receiver arrangement.

A receiver arrangement of this kind comprises an input port for receiving an input RF signal, the input RF signal comprising at least one frequency band including a first subband having a first carrier frequency and a second subband having a second carrier frequency different than the first carrier frequency. A quadrature demodulator is constituted to downconvert, using a local oscillator, the input RF signal to an intermediate frequency to obtain an intermediate frequency signal having an in-phase component and a quadrature component. An analog-to-digital converter digitizes the in-phase component and the quadrature component, and a bandpass filter device filters the in-phase component and the quadrature component.

A receiver arrangement of this kind may for example be part of a repeater system, for example in the shape of a distributed antenna system (DAS). Within such repeater system, signals are received, in the downlink direction, for example from one or multiple base stations, are processed and amplified within the repeater system and are transmitted into a coverage area. The repeater system may for example comprise a multiplicity of remote units connected to a central host unit. The host unit may for example be located outside of a building to communicate with one or multiple outside base stations, whereas the remote units are distributed over different floors of the building and serve to provide coverage on the different floors. In the uplink direction, signals from mobile stations on the different floors may be received by the remote units and may be transmitted, via the host unit, to one or multiple outside base stations.

Nowadays, repeater systems of this kind are constituted to serve a wide frequency band, for example a complete 3GPP band. Herein, a frequency band typically contains multiple carriers carrying information according to different communication technologies and standards such as GSM, UMTS, LTE or the like. Within a frequency band, hence, multiple subbands may be present which are associated with multiple carriers of one or multiple radio access technologies.

A receiver hence must generally be constituted to receive and process multiple subbands within a frequency band.

For processing, the RF signal of the frequency band - in a common approach - is downconverted to an intermediate frequency. In a channelized repeater this may take place by multiple demodulators, which downconvert signals corresponding to different subbands to different intermediate frequencies such that the subband signals can be processed separately in a digitized fashion, for example by digitally filtering the signals.

In such repeater systems conventionally an image suppression filtering is necessary in order to filter out (unwanted) image signals which may overlay with a wanted signal at an intermediate frequency. Such image signals arise because the mixing with a local oscillator frequency generally causes RF signals spaced by the intermediate frequency above and below the local oscillator frequency (f_{LO}+f_{IF} and f_{LO}-f_{IF}) to be downconverted to the intermediate frequency (f_{IF}). If the wanted signal lies at the local oscillator frequency minus the intermediate frequency (f_{LO}-f_{IF}), then the (unwanted) image signal lies at the local oscillator frequency plus the intermediate frequency (f_{LO}+f_{IF}), which consequently must be filtered out in order to avoid signal corruption of the wanted signal.

Such image suppression filtering requires a fairly large number of components and hence significantly adds to the complexity and costs of a receiver arrangement.

There hence is a desire to provide a receiver arrangement, a digital repeater system and a method for operating a receiver arrangement which allow to reduce the complexity of the receiver arrangement.

In an alternative approach a so-called Direct Conversion Receiver (also denoted as Zero-IF Receiver) is employed using a quadrature demodulator, as disclosed for example in US 8,606,194. Within the receiver known from US 8,606,194 contiguous carrier signals are, by mixing them with a local oscillator signal halfway in between the carrier frequencies, downconverted to a common intermediate frequency range, wherein a quadrature demodulator is used yielding in-phase and quadrature components associated with both carrier signals. The individual in-phase and quadrature components can subsequently be isolated due to the phase inversion between them, for example by performing a Fourier Transform or a Hilbert Transform operation such that the original data can be reconstructed.

It is an object of the instant invention to provide a receiver arrangement and a method for operating a receiver arrangement which, in an easy and cost-efficient fashion, allow for a processing of multiple subbands in parallel.

This object is achieved by a receiver arrangement comprising the features of claim 1.

Accordingly, the local oscillator comprises a programmable oscillator frequency, wherein the oscillator frequency is programmed to lie in between the first carrier frequency and the second carrier frequency such that the quadrature demodulator downconverts the first subband and the second subband into a common intermediate frequency band having a bandwidth around the intermediate frequency. Further, the bandpass filter device comprises a passband with a programmable bandwidth, wherein the bandwidth of the passband is programmed according to the bandwidth of the intermediate frequency band.

The receiver arrangement allows to select subbands which may be processed in a combined fashion. The selection can be effected by programming the local oscillator such that the local oscillator frequency lies (roughly) halfway in between the carrier frequency of the first subband and the carrier frequency of the second subband.

Furthermore, by suitably programming the bandpass filter device it can be made sure that only the wanted signals around the intermediate frequency are passed, wherein the bandwidth of the passband of the bandpass filter device is chosen according to the bandwidth of the subband signals.

Because the local oscillator frequency is chosen halfway in between the carrier frequencies of the two subbands to be processed, one carrier frequency lies at the image frequency of the other carrier frequency. Because both carrier frequencies represent wanted signals, no image suppression filtering is required, reducing the number of required components within the repeater arrangement and its costs.

In one aspect, the bandwidth of the intermediate frequency band is equal to the bandwidth of the larger one of the first subband and the second subband. The bandwidth of the intermediate frequency band hence is chosen according to the subbands to be processed.

In particular, the intermediate frequency band may have a bandwidth as large as (or only slightly larger than) the bandwidth of the larger one of the first subband and the second subband. The bandwidth of the passband defines the intermediate frequency band, which hence equals the bandwidth of the larger one of the first subband and the second subband.

The first carrier frequency and the second carrier frequency are located above respectively below the local oscillator frequency such that the local oscillator frequency lies about halfway in between the first carrier frequency and the second carrier frequency. The first carrier frequency hence lies at the image frequency of the second carrier frequency and vice versa. The subbands of the carrier frequencies herein do not have to be contiguous, but other carrier frequencies may lie in between the first subband associated with the first carrier frequency and the second subband associated with the second carrier frequency. By means of the bandpass filter device, upon downconverting the RF input signal to the intermediate frequency, only the subband signals associated with the first subband and the second subband are passed for further processing, and the further subbands lying in between and around the first and the second subband are suppressed.

In one aspect, the first subband and the second subband may correspond to uplink bands of different uplink communication channels. The uplink direction herein is to be understood as the communication direction from a user equipment (UE), in particular a mobile device, towards a base station of a telecommunications network, whereas the downlink direction is to be understood as the communication direction from the base station towards the user equipment. The receiver arrangement in particular may be used in the uplink direction to receive signals from a user equipment and may process signals corresponding to uplink bands for transmission towards the base station of a telecommunications network.

Within the receiver arrangement the in-phase component and the quadrature component obtained from the quadrature demodulator are digitized by means of an analog-to-digital converter. Such analog-to-digital converter may, in one aspect, be for example implemented by a so-called Delta-Sigma analog-to-digital converter, which in particular may be constituted as a bandpass Delta-Sigma analog-to-digital converter into which the bandpass filter device is integrated. The digitizing and the bandpass filtering hence are performed by a common component, namely the bandpass Delta-Sigma analog-to-digital converter. The bandwidth of the bandpass Delta-Sigma analog-to-digital converter herein is programmable and may be set according to the bandwidth of the subbands to be processed.

A bandpass Delta-Sigma analog-to-digital converter is for example known from US 2005/0190091 A1, which shall be incorporated herein by reference.

The receiver arrangement allows for a parallel processing of two subbands. Herein, the receiver arrangement may be scaled in an easy fashion to allow for a processing of four, six, eight or even more subbands by using multiple demodulators in parallel processing paths. For example, in a quad-band receiver arrangement four subbands may be received and processed in that a first demodulator downconverts, using a first local oscillator, a high band input signal to a first intermediate frequency and a second demodulator downconverts, using a second local oscillator, a low band input signal to a second intermediate frequency. Herein, an input RF filter device filters the input RF signal into a high band input signal and a low band input signal prior to the first demodulator and the second demodulator. The first demodulator, then, downconverts and processes the high band input signal, whereas the second demodulator downconverts and processes the low band input signal. By separately digitizing and filtering the in-phase components and the quadrature components obtained from the demodulators, then, the subbands may be processed separately for retransmission.

A digital repeater system, in one aspect, comprises a receiver arrangement of the type described above. The digital repeater system, in one embodiment, may comprise a host unit and at least one remote unit remote from the host unit and connected to the host unit via a transport medium. By means of a repeater system of this kind for example a distributed antenna system (DAS) may be provided, in which for example the host unit may be located outside of a coverage area for communicating with one or multiple base stations of one or multiple communication networks. The remote units, in turn, may be distributed over the coverage area to provide network coverage within the coverage area.

For example, the remote units may be distributed over different floors of a building. In another example, the repeater system may be used on a movable object such as a train, wherein the remote units provide coverage within the different carriages of the train.

A receiver arrangement of the type described above in particular is suitable for signal reception and processing in the uplink direction. Hence, the receiver arrangement may for example be part of the at least one remote unit in order to receive an RF input signal in the uplink direction from a user equipment located within a coverage area served by the at least one remote unit.

The object is also achieved by a method for operating a receiver arrangement for use in a digital repeater system, the method comprising:
- receiving an input RF signal at an input port of the receiver arrangement, the input RF signal comprising at least one frequency band including a first subband having a first carrier frequency and a second subband having a second carrier frequency different than the first carrier frequency,
- downconverting, by a quadrature demodulator using a local oscillator, the input RF signal into an intermediate frequency to obtain an intermediate frequency signal having an in-phase component and a quadrature component,
- digitizing the in-phase component and the quadrature component by an analog-to-digital converter, and
- filtering the in-phase component and the quadrature component by a bandpass filter device.

Herein, the method comprises the further steps of
- programming an oscillator frequency of the local oscillator to lie in between the first carrier frequency and the second carrier frequency such that the quadrature demodulator downconverts the first subband and the second subband into a common intermediate frequency band having a bandwidth around the intermediate frequency, and
- programming a bandwidth of a passband of the bandpass filter device according to the bandwidth of the intermediate frequency band.

The advantages and advantageous embodiments described above for the receiver arrangement and the repeater system equally apply also to the method, such that it shall be referred to the above.

The idea underlying the invention shall subsequently be described in more detail with regard to the embodiments shown in the figures. Herein:
- Fig. 1: shows a schematic overview of a digital repeater system comprising a host unit connected to multiple remote units;
- Fig. 2: shows a schematic view of a receiver arrangement of a remote unit in communication with the host unit via a transport medium;
- Fig. 3: shows a schematic view of the receiver arrangement;
- Fig. 4: shows a schematic view of subbands within a frequency band, for example a 3GPP frequency band;
- Fig. 5: shows a schematic view of the downconversion of two subbands into a common intermediate frequency band; and
- Fig. 6: shows a schematic view of a quad-band receiver for receiving and processing four subbands in parallel.

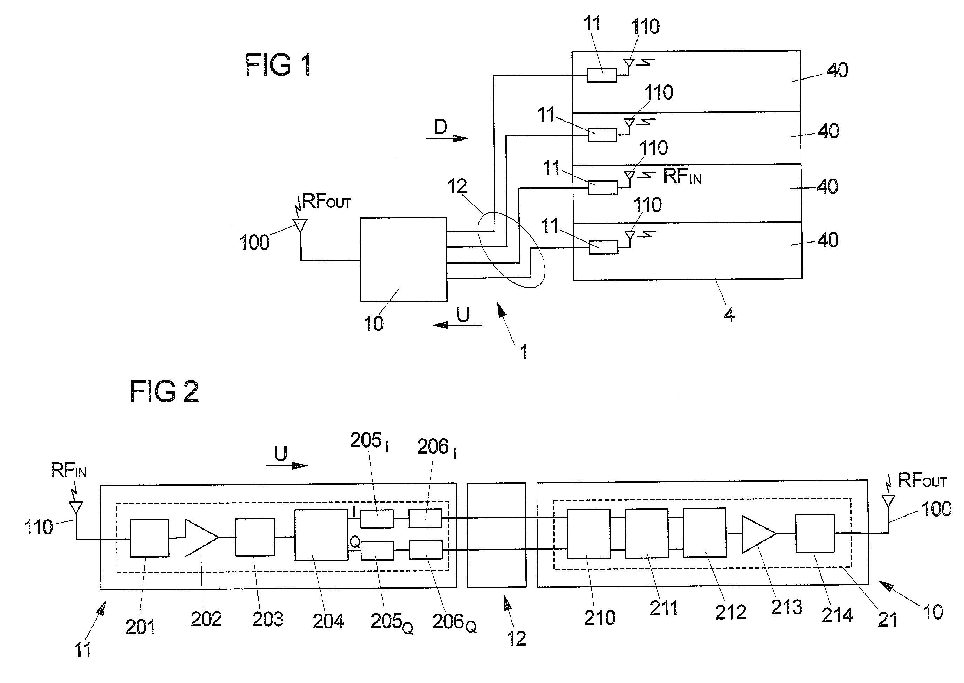

Fig. 1 shows, in a schematic drawing, a digital repeater system 1 comprising a host unit 10 and multiple remote units 11. The host unit 10 may for example be located outside a building 4 and comprises an antenna 100 via which the host unit 10 is for example connected to one or multiple base stations of one or multiple communication networks using an air interface. The remote units 11 are located on different floors 40 of the building 4 and serve to provide coverage throughout the different floors 40 of the building 4. The remote units 11 are connected to the host unit 10 via a transport medium 12, for example a network of optical fibers, and hence are in communication connection with the host unit 10. Each remote unit 11 comprises an antenna 110 via which the remote unit 11 for example is connected to a mobile device of a user on a floor 40 of the building 4.

In an uplink direction U for example, an RF input signal RF_{IN} is received via the antenna 110 at one or multiple of the remote units 11, is processed within the remote units 11 for transporting via the transport medium 12 to the host unit 10 and, after further processing, is sent out via the antenna 100 as an RF output signal RF_{OUT}. The RF output signal RF_{OUT} may be received by one or multiple base stations of one or multiple outside telecommunications networks.

Vice versa, in a downlink direction D an RF signal received at the antenna 100 of the host unit 10 is split and fed via the transport medium 12 to the multiple remote units 11 for retransmission over the different floors 40 of the building 4.

By means of the repeater system 1 one or multiple frequency bands of one or multiple radio access technologies adhering to one or multiple different standards may be processed. Herein, for example in the downlink direction D, the remote units 11 may be constituted to receive RF signals within a frequency band corresponding for example to a complete 3GPP frequency band, wherein the RF signals are for example processed within the remote units 11, are transported via the transport medium 12 (for example an optical fiber network, an air interface or the like) and may be further processed within the host unit 10 for retransmission towards the outside.

Herein, the host unit 10 may be connected to one or multiple outside base stations via an air interface. In addition or alternatively, the host unit 10 may be connected in a wire-bound fashion, for example via coaxial cables or fibre-optic connections, to one or multiple base stations.

Fig. 2 shows an embodiment of a receiver arrangement 20 arranged within a remote unit 11 and serving to receive and process an input RF signal RF_{IN} received at an input port in the shape of the antenna 110 of the remote unit 11. The remote unit 11 generally may be constituted as a so-called universal access point (in short: UAP) providing access to outside telecommunications networks by means of different radio access technologies.

As depicted in Fig. 2, the receiver arrangement 20 comprises an input RF filter 201 which for example may serve to pass a high band or a low band within a 3GPP network. The filtered signals are amplified by a low noise amplifier 202, are filtered by a filter 203 and enter into a quadrature demodulator 204 (which shall be described in detail below). The quadrature demodulator 204 outputs an in-phase component I and a quadrature component Q, which are processed in different paths and are filtered by filters 205_{I}, 205_{Q} and digitized by means of analog-to-digital converter 206_{I}, 206_{Q}. The in-phase component I and the quadrature component Q may then be processed, for example digitally filtered, prior to transmitting them via the transport medium 12 towards the host unit 10 (in the uplink direction U).

At the host unit 10 the in-phase component I and the quadrature component Q are processed within a digital signal processing unit 210 (for example a DSP, an FPGA, an ASIC or the like) in order to for example digitally filter the different components I, Q and for combining signals of different remote units 11. Within a digital-to-analog converter 211 the components I, Q are converted into analog signals, are upconverted to the RF frequency range by a modulator 212 and are subsequently power-amplified in a power amplifier 213. After power amplification the RF signals are filtered by an RF output filter 214 and are transmitted via the antenna 100 of the host unit 10.

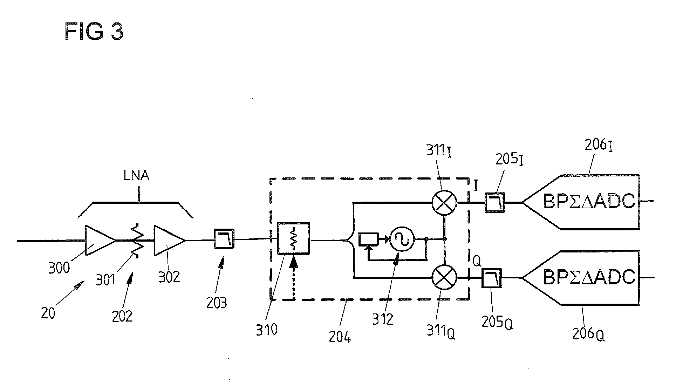

The receiver arrangement 20, in one embodiment, is constituted as a dual-band complex intermediate frequency (IF) receiver using a quadrature demodulator 204, as schematically shown in Fig. 3.

In the embodiment of Fig. 3, the low noise amplifier 202 is constituted as a two-stage low noise amplifier comprising a first amplifier stage 300 and a second amplifier stage 302, in between which an attenuator 301 is placed.

The filter 203 is constituted as a low-pass filter serving to suppress far-off into modulation products.

After the filter 203 the (amplified and filtered) RF signal enters into the quadrature demodulator 204 and passes a step attenuator 310, which serves to reduce the signal strength in a way such that peaks at the input of the subsequent analog-to-digital converter 206_{I}, 206_{Q} do not exceed a maximum allowed input level. The RF signal then is mixed, in two different paths, by mixers 311_{I}, 311_{Q} with a local oscillator signal of a local oscillator 312, wherein the local oscillator signals fed to the mixers 311_{I}, 311_{Q} are 90° out of phase in order to receive an in-phase component I and a quadrature component Q.

The mixing with the local oscillator signal serves to downconvert the RF signal to an intermediate frequency, as shall be described below. After downconverting, the separate components I, Q are passed through low-pass filters 205_{I}, 205_{Q} serving to suppress far-off intermodulation signals and are fed to analog-to-digital converters 206_{I}, 206_{Q} for digitizing the components I, Q.

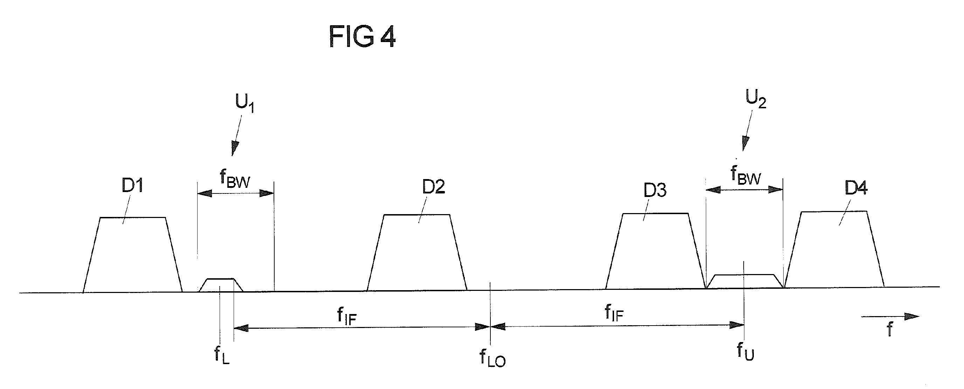

The receiver arrangement 20 shall be constituted to process two subbands of a frequency band in parallel. An example of a frequency band is shown in Fig. 4, the frequency band comprising two uplink subbands U1, U2 and four downlink subbands D1-D4 (which shall be suppressed). The subbands U1, U2, D1-D4 are distinct in frequency, wherein each uplink subband U1, U2 may be placed in between neighbouring downlink subbands D1-D4.

By means of the receiver arrangement 20, two uplink subbands U1, U2 shall be processed for retransmission via the host unit 10 in the uplink direction U. The receiver arrangement 20 herein is constituted to select, pass and process the uplink subbands U1, U2 by suitably programming the local oscillator frequency f_{LO} and the bandwidth and center frequency of a bandpass filtering implemented by the analog-to-digital converters 206_{I}, 206_{Q}, each constituted, in a specific example, by a bandpass Delta-Sigma analog-to-digital converter.

In particular, the local oscillator frequency f_{LO} of the local oscillator 312 is programmable and chosen such that it lies (roughly) halfway in between the carrier frequency f_{L} of the lower uplink subband U1 and the carrier frequency f_{U} off the upper uplink subband U2, as shown in Fig. 4. The carrier frequencies f_{L}, fu of the uplink subbands U1, U2 hence lie at each other's image frequency with respect to the local oscillator frequency f_{LO}. The distance between the carrier frequencies f_{L}, f_{U} and the local oscillator frequency f_{LO} (roughly) equals the intermediate frequency f_{IF}.

The bandwidth of the bandpass filtering implemented by the bandpass Delta-Sigma analog-to-digital converters 206I, 206Q equals the bandwidth f_{BW} of the larger one of the uplink subbands U1, U2, in this case the bandwidth f_{BW} of the upper uplink subband U2.

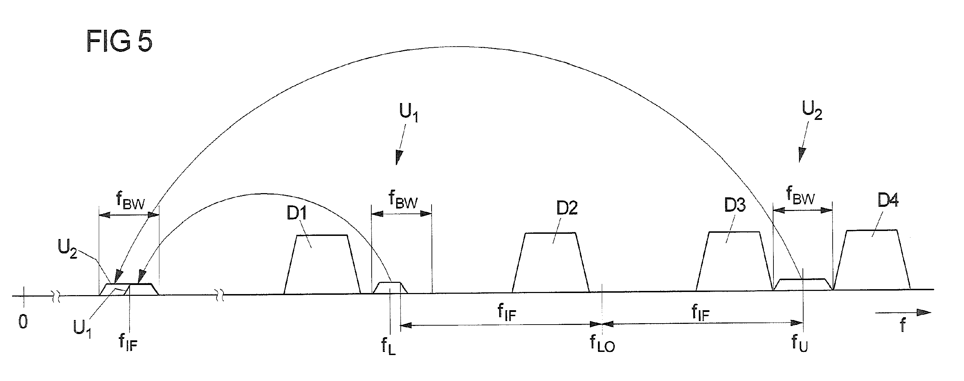

Upon downconverting, as shown in Fig. 5, the uplink subbands U1, U2 are downconverted to a common intermediate frequency band around the intermediate frequency f_{IF}, the intermediate frequency band having a bandwidth f_{BW} determined by the bandwidth of the bandpass filtering implemented by the bandpass Delta-Sigma analog-to-digital converter 206_{I}, 206_{Q}. The uplink subbands U1, U2 hence are downconverted into the same intermediate frequency band, wherein the individual in-phase component I and quadrature component Q of the different signals of the different uplink subbands U1, U2 can be isolated by subsequent processing because of the phase inversion between them, such that the original signals can later be reconstructed.

Due to the bandpass filtering within the bandpass Delta-Sigma analog-to-digital converters 206_{I}, 206_{Q} only the subband signals associated with the uplink subbands U1, U2 around the intermediate frequency f_{IF} are passed and further processed. Other signals, in particular signals associated with the downlink subbands D3, D4 adjacent to the upper uplink subband U2, are suppressed by means of the bandpass filtering.

Within the Delta-Sigma analog-to-digital converters 206_{I}, 206_{Q} there are for example two filter stages. Herein, the first filter stage is implemented by an (analog) noise shaping filter, which is needed to improve the dynamic range of the single bit Delta-Sigma analog-to-digital converter 206_{I}, 206_{Q}. The filter bandwidth of the noise shaping filter generally must be larger than the wanted signal bandwidth. By means of the noise shaping filter a good signal representation for the wanted signal is achieved, while unwanted components at higher frequencies comprise a larger noise content. Nonetheless, unwanted signal components at higher frequencies in general are still visible in the digital domain and hence are removed in a signal processing stage, which is an integral part of the analog-to-digital converter 206_{I}, 206_{Q} to reduce the data rate of the in-phase and quadrature signals I, Q.

Because the local oscillator 312 in its local oscillator frequency f_{LO} as well as the bandpass Delta-Sigma analog-to-digital converters 206_{I}, 206_{Q} in their passband bandwidth f_{BW} are programmable, the receiver arrangement 20 can be flexibly adjusted to serve a particular pair of subbands. Herein, the bandwidth of the passband of the bandpass Delta-Sigma analog-to-digital converter 206_{I}, 206_{Q} is chosen according to the larger one of the subbands U1, U2 (in the depicted example the upper uplink subband U2), and the local oscillator frequency f_{LO} is chosen such that both subbands, after downconversion, fall into the common intermediate frequency band having the bandwidth f_{BW} of the larger one of the processed subbands U1, U2.

Because the processed subbands U1, U2 lie at each other's image frequencies, an image suppression filtering is not required, greatly reducing the complexity of the receiver arrangement 20 in comparison to conventional receiver arrangements. In particular, the receiver arrangement 20 can be fabricated using a reduced number of components at low cost. Further, the power consumption within such receiver arrangement 20 may be reduced in comparison to conventional receiver arrangements.

The receiver arrangement 20 of Fig. 3 is constituted to process two subbands in parallel. In order to provide a quad-band receiver for processing four subbands in parallel, the receiver arrangement 20 may be doubled in order to provide for a processing of different bands in different parallel paths.

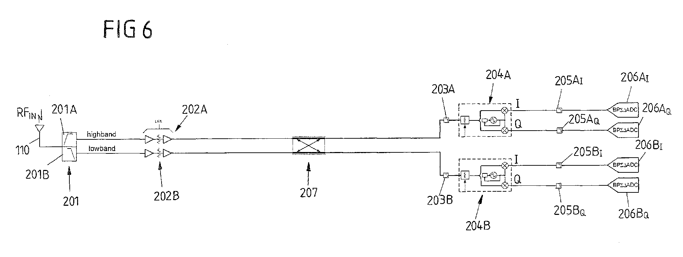

As shown in the example of Fig. 6, in a quad-band receiver arrangement a received input RF signal RF_{IN} may be fed to an input RF filter 201 separating the input RF signal RF_{IN} into a high band signal (high-pass filter 201 A) and a low band signal (low-pass filter 201 B). The high band may for example correspond to a 3GPP high band, and the low band may correspond to a 3GPP low band within a lower frequency range.

Generally speaking, within this approach the overall spectrum is split into portions of useful bandwidth. For each portion, a low-noise amplifier circuitry optimized for the particular, associated portion is implemented. The output signals of the low-noise amplifiers 202A, 202B are combined, allowing to feed the subsequent demodulators 204A, 204B with the full spectrum. After combining the signals can be split and fed to multiple demodulators 204A, 204B. Fig. 6 depicts an example in which a combiner and splitter are implemented by a hybrid coupler 207 in between the low-noise amplifiers 202A, 202B and the filters 203A, 203B.

In general, more than two low-noise amplifiers 202A, 202B and more than two demodulators 204A, 204B could be present to implement a receiver structure suitable to process more than four bands, e.g. six, eight, ten or more bands.

Subsequently, the high band and the low band are processed separately and in particular are low-noise amplified by low noise amplifiers 202A, 202B, are filtered by low-pass filters 203A, 203B to suppress intermodulation products and are downconverted by quadrature demodulators 204A, 204B to obtain in-phase components I and quadrature components Q. The in-phase components I and the quadrature components Q are then low-pass filtered by filters 205A_{I}, 205A_{Q}, 205B_{I}, 205B_{Q} and are bandpass filtered and digitized by bandpass Delta-Sigma analog-to-digital converters 206A_{I}, 206A_{Q}, 206B_{I}, 206B_{Q}.

The processing of the high band and the low band takes place in an analogous fashion as described above according to the arrangement of Fig. 3, such that it shall be referred to the above.

By means of the receiver arrangement of Fig. 6, four subbands may be processed in parallel. Herein, the local oscillator frequencies of the local oscillators of the demodulators 204A, 204B are chosen according to the subbands to be processed, wherein the subband signals of the subbands of the high band and the low band are processed at different intermediate frequencies.

The idea underlying the invention is not limited to the embodiments described above, but may be implemented in an entirely different fashion.

In particular, the invention is applicable to different frequency bands of different radio access technologies, such as GSM, UMTS, LTE or the like.

The receiver arrangement may be scaled to process more than four subbands, for example six, eight or even more subbands. For this, multiple receiver arrangements can be used in parallel.

### List of Reference Numerals

- 1: System
- 10: Host unit
- 100: Antenna
- 11: Remote unit
- 110: Antenna
- 12: Transport medium
- 20: Receiver arrangement
- 201,201A,201B: RF filter
- 202, 202A, 202B: Low-noise amplifier
- 203, 203A, 203B: Filter
- 204, 204A, 204B: Quadrature demodulator
- 205_{I}, 205_{Q}, 205A_{I}, 205A_{Q}, 205B_{I}, 205B_{Q}: Filter
- 206_{I}, 206_{Q}, 206A_{I}, 206A_{Q}, 206B_{I}, 206B_{Q}: Analog-to-digital converter
- 207: Hybrid coupler
- 21: Transmitting arrangement
- 210: Digital signal processing unit (DSP)
- 211: Digital-to-analog converter
- 212: Modulator
- 213: Power amplifier
- 214: RF filter
- 300: First amplifier stage
- 301: Attenuator
- 302: Second amplifier stage
- 310: Step attenuator
- 311_{I}, 311_{Q}: Mixer
- 312: Local oscillator
- 4: Building
- 40: Floor
- D: Downlink direction
- D1-D4: Downlink bands
- f: Frequency
- f_{IF}: Intermediate frequency
- f_{LO}: Frequency of local oscillator
- f_{L}: Frequency of lower uplink band
- f_{U}: Frequency of upper uplink band
- f_{BW}: Bandwidth of bandpass filter
- I: In-phase component
- Q: Quadrature component
- RF_{IN}: RF input signal
- RF_{OUT}: RF output signal
- U: Uplink direction
- U1, U2: Uplink bands

## Claims

1. A receiver arrangement (20) for use in a digital repeater system (1), the receiver arrangement (20) comprising:
- an input port (110) for receiving an input RF signal (RF_{IN}), the input RF signal (RF_{IN}) comprising at least one frequency band including a first subband (U1) having a first carrier frequency (f_{L}) and a second subband (U2) having a second carrier frequency (f_{U}) different than the first carrier frequency (f_{L}),
- a quadrature demodulator (204, 204A, 204B) constituted to downconvert, using a local oscillator (312), the input RF signal (RF_{IN}) to an intermediate frequency (f_{IF}) to obtain an intermediate frequency signal having an in-phase component (I) and a quadrature component (Q),
- an analog-to-digital converter (206_{I}, 206_{Q}) to digitize the in-phase component (I) and the quadrature component (Q),
- a bandpass filter device (206_{I}, 206_{Q}) for filtering the in-phase component (I) and the quadrature component (Q),
**characterized in**
**that**
- the local oscillator (312) comprises a programmable oscillator frequency (f_{LO}), wherein the oscillator frequency (f_{LO}) is programmed to lie in between the first carrier frequency (f_{L}) and the second carrier frequency (fu) such that the quadrature demodulator (204) downconverts the first subband (U1) and the second subband (U2) into a common intermediate frequency band (f_{BW}) having a bandwidth around the intermediate frequency (f_{IF}), and
- the bandpass filter device (206_{I}, 206_{Q}) comprises a passband with a programmable bandwidth, wherein the bandwidth of the passband is programmed according to the bandwidth of the intermediate frequency band (f_{BW}).

2. The receiver arrangement (20) according to claim 1, **characterized in that** the bandwidth of the intermediate frequency band (f_{BW}) is equal to the bandwidth of the larger one of the first subband (U1) and the second subband (U2).

3. The receiver arrangement (20) according to claim 1 or 2, **characterized in that** at least one further subband (D1-D4) associated with a further carrier frequency lies in between the first subband (U1) and the second subband (U2).

4. The receiver arrangement (20) according to one of claims 1 to 3, **characterized in that**, by means of the bandpass filter device (206I, 206Q), further subbands (D1-D4) adjacent to the first subband (U1) and/or the second subband (U2) are suppressed.

5. The receiver arrangement (20) according to one of the preceding claims, **characterized in that** the first subband (U1) and the second subband (U2) correspond to uplink bands of different uplink communication channels.

6. The receiver arrangement (20) according to one of the preceding claims, **characterized in that** the analog-to digital converter (206_{I}, 206_{Q}) is implemented by a Delta-Sigma analog-to-digital converter.

7. The receiver arrangement (20) according to one of the preceding claims, **characterized in that** the analog-to digital converter (206_{I}, 206_{Q}) is a Bandpass Delta-Sigma analog-to-digital converter including the bandpass filter device.

8. The receiver arrangement (20) according to one of the preceding claims, **characterized in that** the receiver arrangement (20) comprises an input RF filter (201, 201 A, 201 B) for dividing the input RF signal (RF_{IN}) into a high-band input signal and a low-band input signal, wherein the receiver arrangement (20) comprises
- a first demodulator (204A) constituted to downconvert, using a first local oscillator (312), the high-band input signal to a first intermediate frequency (f_{IF}) to obtain a first intermediate frequency signal having an in-phase component (I) and a quadrature component (Q) and
- a second demodulator (204B) constituted to downconvert, using a second local oscillator (312), the low-band input signal to a second intermediate frequency (f_{IF}) to obtain a second intermediate frequency signal having an in-phase component (I) and a quadrature component (Q).

9. A digital repeater system (1), comprising a receiver arrangement (20) according to one of the preceding claims.

10. The digital repeater system (1) according to claim 9, **characterized in that** the digital repeater system (1) comprises
- a host unit (10) and
- at least one remote unit (11) remote from the host unit (10) and connected to the host unit (10) via a transport medium (12).

11. The digital repeater system (1) of claim 10, **characterized in that** the receiver arrangement (20) is part of the at least one remote unit (11) and is constituted to receive an RF input signal in the uplink direction (U).

12. A method for operating a receiver arrangement (20) for use in a digital repeater system (1), the method comprising:
- receiving an input RF signal (RF_{IN}) at an input port (110) of the receiver arrangement (20), the input RF signal (RF_{IN}) comprising at least one frequency band including a first subband (U1) having a first carrier frequency (f_{L}) and a second subband (U2) having a second carrier frequency (fu) different than the first carrier frequency (f_{L}),
- downconverting, by a quadrature demodulator (204, 204A, 204B) using a local oscillator (312), the input RF signal (RF_{IN}) to an intermediate frequency (f_{IF}) to obtain an intermediate frequency signal having an in-phase component (I) and a quadrature component (Q),
- digitizing the in-phase component (I) and the quadrature component (Q) by an analog-to-digital converter (206_{I}, 206_{Q}),
- filtering the in-phase component (I) and the quadrature component (Q) by a bandpass filter device (206_{I}, 206_{Q}),
**characterized by**
the steps of
- programming an oscillator frequency (f_{LO}) of the local oscillator (312) to lie in between the first carrier frequency (f_{L}) and the second carrier frequency (f_{U}) such that the quadrature demodulator (204) downconverts the first subband (U1) and the second subband (U2) into a common intermediate frequency band (f_{BW}) having a bandwidth around the intermediate frequency (f_{IF}), and
- programming a bandwidth of a passband of the bandpass filter device (206_{I}, 206_{Q}) according to the bandwidth of the intermediate frequency band (f_{BW}).
